# EUROPEAN PATENT APPLICATION

(11) **EP 4 604 223 A1**
(43) Date of publication of application: **20.08.2025**
(21) Application number: 25156861.4
(22) Date of filing: 10.02.2025
(51) Int. Cl.: H01M 8/04082, H01M 8/04276, H01M 8/18

(54) **FLOW BATTERY WITH THERMAL ACTIVATION**

(30) Priority: 09.02.2024 US 202418437532
(71) Applicant: Hamilton Sundstrand Corporation, Charlotte, NC 28217-4578 (US)
(72) Inventor: KILCHYK, Viktor, Lancaster, NY (US); MERRITT, Brent J., Southwick, MA (US)
(74) Representative: Dehns

(57) **Abstract**

A battery system includes an anode circuit (12) configured to urge a flow of anolyte therethrough to an anode side of an electrode and a cathode circuit (16) configured to urge a flow of catholyte therethrough to a cathode side of the electrode. An electric circuit is operably connected to the electrode to utilize electrical energy generated via a chemical reaction between the flow of anolyte and the flow of catholyte at the electrode. The flow of anolyte is driven through the anode circuit (12) by thermal expansion and/or thermal contraction of one or more components of the anode circuit (12). The flow of catholyte is driven through the cathode circuit (16) by thermal expansion and/or thermal contraction of one or more components of the cathode circuit (16).

## Description

### BACKGROUND

Exemplary embodiments pertain to the art of power generation and storage, and in particular to flow batteries for, for example, aircraft and space applications.

A flow battery, also known as a redox flow battery, is a type of electrochemical cell in which chemical energy is provided by two chemical components dissolved in liquids that are pumped through the system on separate sides of a membrane. Ion transfer inside of the cell occurs through the membrane while both liquids circulate in their own respective spaces. The ion transfer results in a flow of electrical current through an external circuit operably connected to the membrane. This electrical current can then be utilized as desired. The liquids utilized in the cell are stored externally, generally in respective tanks, and are pumped through the cell or cells.

Interest in flow batteries has increased considerably with increasing storage needs of renewable energy sources. High-capacity flow batteries, which have large tanks of electrolytes, are capable of storing a large amount of electrical energy.

### BRIEF DESCRIPTION

In one exemplary embodiment, a battery system includes an anode circuit configured to urge a flow of anolyte therethrough to an anode side of an electrode and a cathode circuit configured to urge a flow of catholyte therethrough to a cathode side of the electrode. An electric circuit is operably connected to the electrode to utilize electrical energy generated via a chemical reaction between the flow of anolyte and the flow of catholyte at the electrode. The flow of anolyte is driven through the anode circuit by thermal expansion and/or thermal contraction of one or more components of the anode circuit. The flow of catholyte is driven through the cathode circuit by thermal expansion and/or thermal contraction of one or more components of the cathode circuit.

Additionally or alternatively, in this or other embodiments at least one of the anode circuit and the cathode circuit include a chamber formed from a first thermally activated material having a first coefficient of thermal expansion. The chamber is configured to change perimetrical shape when a temperature of an interior of the chamber is increased.

Additionally or alternatively, in this or other embodiments the chamber is at least partially formed from a second thermally activated material having a second coefficient of thermal expansion less than the first coefficient of thermal expansion to effect the change in perimetrical shape of the interior of the chamber.

Additionally or alternatively, in this or other embodiments positioning of the second thermally activated material in a chamber wall of the chamber varies around the perimeter of the chamber.

Additionally or alternatively, in this or other embodiments at a first perimetrical location, the second thermally activated material is positioned at an interior side of the chamber wall.

Additionally or alternatively, in this or other embodiments at a second perimetrical location, the second thermally activated material is positioned at an exterior side of the chamber wall.

Additionally or alternatively, in this or other embodiments the chamber is formed by one or more additive manufacturing processes.

Additionally or alternatively, in this or other embodiments the battery system is absent an electrically or mechanically driven pump to urge the flow of anolyte or the flow of catholyte toward the electrode.

Additionally or alternatively, in this or other embodiments the electric circuit is operably connected to the electrode via one or more current collectors disposed at the electrode.

Additionally or alternatively, in this or other embodiments the electrical energy is generated via ion transfer at the electrode.

In another exemplary embodiment, a method of operating a battery system includes urging a flow of anolyte through an anode circuit to an anode side of an electrode, urging a flow of catholyte through a cathode circuit to a cathode side of the electrode, and generating electrical energy at the electrode via a chemical reaction between the flow of anolyte and the flow of catholyte at the electrode. The flow of anolyte is driven through the anode circuit by thermal expansion and/or thermal contraction of one or more components of the anode circuit. The flow of catholyte is driven through the cathode circuit by thermal expansion and/or thermal contraction of one or more components of the cathode circuit.

Additionally or alternatively, in this or other embodiments at least one of the anode circuit and the cathode circuit include a chamber formed from a first thermally activated material having a first coefficient of thermal expansion. The chamber is configured to change perimetrical shape when a temperature of an interior of the chamber is increased.

Additionally or alternatively, in this or other embodiments the chamber is at least partially formed from a second thermally activated material having a second coefficient of thermal expansion less than the first coefficient of thermal expansion to effect the change in perimetrical shape of the interior of the chamber.

Additionally or alternatively, in this or other embodiments a positioning of the second thermally activated material is varied in a chamber wall of the chamber around the perimeter of the chamber.

Additionally or alternatively, in this or other embodiments at a first perimetrical location, the second thermally activated material is positioned at an interior side of the chamber wall.

Additionally or alternatively, in this or other embodiments at a second perimetrical location, the second thermally activated material is positioned at an exterior side of the chamber wall.

Additionally or alternatively, in this or other embodiments the chamber is formed by one or more additive manufacturing processes.

Additionally or alternatively, in this or other embodiments the battery system is absent an electrically or mechanically driven pump to urge the flow of anolyte or the flow of catholyte toward the electrode.

Additionally or alternatively, in this or other embodiments the electric circuit is operably connected to the electrode via one or more current collectors disposed at the electrode.

Additionally or alternatively, in this or other embodiments the electrical energy is generated via ion transfer at the electrode.

### BRIEF DESCRIPTION OF THE DRAWINGS

The following descriptions should not be considered limiting in any way. With reference to the accompanying drawings, like elements are numbered alike:
FIG. 1 is a schematic illustration of an exemplary embodiment of a flow battery;
FIG. 2 is another illustration of an exemplary embodiment of a flow battery;
FIG. 3 is a partially illustration of an embodiment of a chamber wall in a first state;
FIG. 4 is a partial illustration of an embodiment of a chamber wall in a second state;
FIG. 5 is a partial cross-sectional view of an embodiment of a chamber in a first state; and
FIG. 6 is a partial cross-sectional view of an embodiment of a chamber in a second state.

### DETAILED DESCRIPTION

A detailed description of one or more embodiments of the disclosed apparatus and method are presented herein by way of exemplification and not limitation with reference to the Figures.

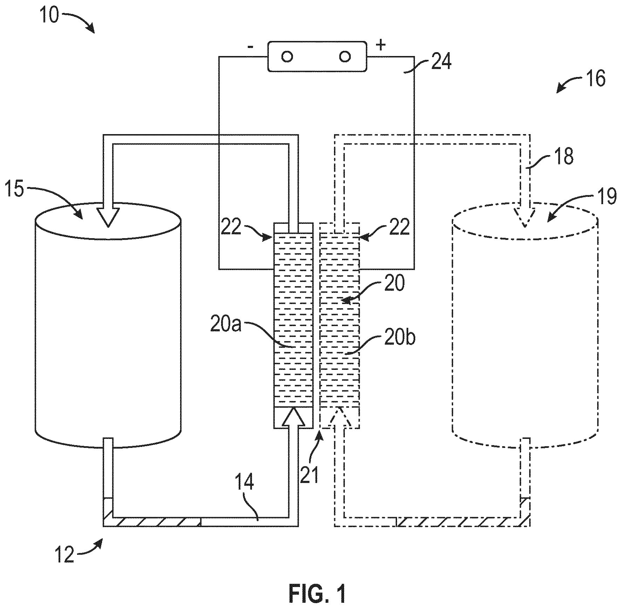

Referring to FIG. 1, shown is a schematic of an exemplary embodiment of a flow battery 10. The flow battery 10 includes an anode circuit 12 through which a volume of anolyte 14 is circulated via an anode tank 15, and a cathode circuit 16 through which a volume of catholyte 18 is circulated via a cathode tank 19. The anode circuit 12 and the cathode circuit 16 are interconnected at an electrode 20, which in some embodiments is a porous electrode 20 having a membrane 21 separating an anode side 20a of the electrode 20 from a cathode side 20b of the electrode 20. As the anolyte 14 and the catholyte 18 are circulated through the respective anode circuit 12 and the cathode circuit 16, ions are transferred at the electrode 20 generating an electric current that is collected at current collectors 22 of the electrode 20. The current collectors 22 are connected to an external electric circuit 24 to utilize the flow of electrical energy.

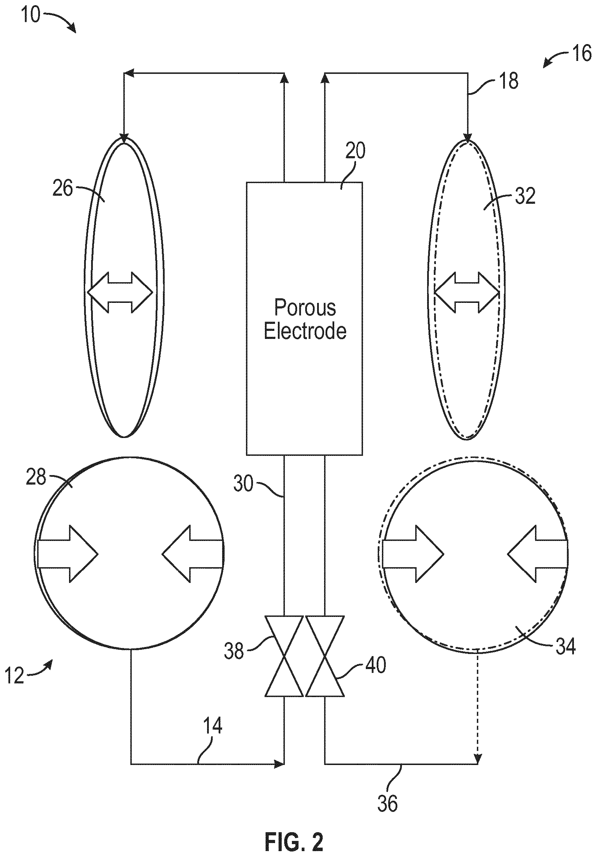

Referring now to FIG. 2, in some embodiments, the flow of anolyte 14 is urged between a first anode chamber 26 and a second anode chamber 28, with the electrode 20 disposed along an anode pathway 30 between the first anode chamber 26 and the second anode chamber 28. Similarly, the flow of catholyte 18 is urged between a first cathode chamber 32 and a second cathode chamber 34, with the electrode 20 disposed along a cathode pathway 36 between the first cathode chamber 32 and the second cathode chamber 34. In some embodiments, an anode control valve 38 is located along the anode pathway 30 to control or meter the flow of anolyte 14 along the anode pathway 30, and a cathode control valve 40 may be positioned along the cathode pathway 36 to similarly control or meter the flow of catholyte 18 along the cathode pathway 36. The flows of anolyte 14 and catholyte 18 are urged along the respective pathways 30 and 36 by volumetric expansion and contraction of the chambers 26, 28, 32, 34.

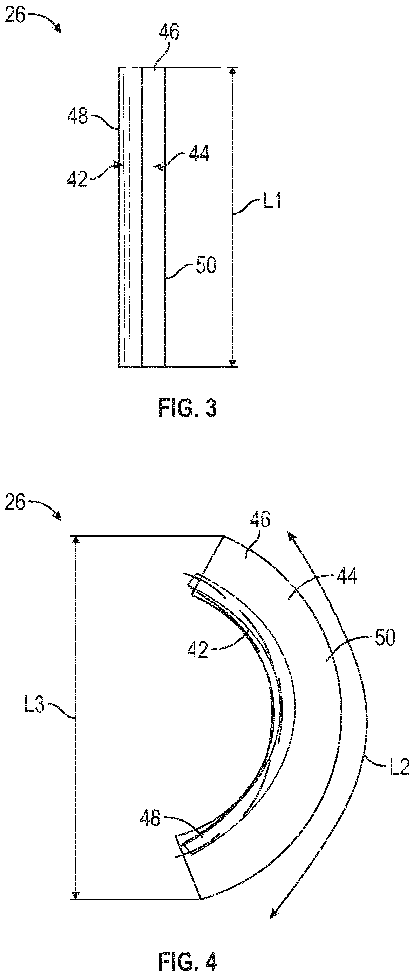

Referring now to FIG. 3 and 4, construction of the chambers 26, 28, 32, 34 will now be described. For the sake of clarity, construction of the first anode chamber 26 will be described, and one skilled in the art will readily appreciate that the other chambers 28, 32 and 34 may be similarly constructed. The chamber 26 utilizes a thermally adaptive material with a thermal expansion coefficient such that with increasing temperature of the chamber 26, such as from inflow of high temperature anolyte 14 into the chamber 26, the internal volume of the chamber 26 is increased. Thermally adaptive materials change shape when temperature varies. The variation may result from environmental changes or from, for example, electric heating or cooling. In some embodiments, the thermal adaptive materials utilized may include one or more of plastics with a gradient of thermal expansion produced by composition change, added fibers or filling, multi-metallic (bimetallic) materials with gradient of composition, and shape memory alloys.

Similarly, outflow of the anolyte 14 results in a lower internal temperature of the chamber 26 and the internal volume of the chamber 26 decreases. To control the expansion and contraction of the chamber 26, the structure is reinforced in selected locations with a second material, a reinforcing material 42 that is non-uniformly dispersed in the first material 44 of the chamber 26. The second material 42 has a second coefficient of thermal expansion that is less than a first coefficient of thermal expansion of the first material 44. This selective dispersing of the second material 42 in the first material 44 results in a non-uniform shape change of the chamber 26 when under thermal expansion.

An example of this is illustrated in FIGS. 3 and 4, which illustrate a portion of a chamber wall 46 the chamber 26. In the embodiment of FIG. 3, the second material 42 is concentrated at a first side 48 of the chamber wall 46, while a second side 50 of the chamber wall 46 does not include the second material 42 and thus is substantially unreinforced. In this unheated state, the portion of the chamber wall 46 has a length L1. Referring now to FIG. 4, when the chamber wall 46 is heated due to, for example, an inflow of hot anolyte or catholyte, the chamber wall 46 expands non-uniformly. The second side 50 increases in length to a length L2, while the first side 48, due to placement of the reinforcement second material 42, increases in length to a length L3, which is less than L2. This results in an increase in curvature of the chamber wall 46. In some embodiments, the non-uniform dispersal of the second material 42 in the chamber wall 46 is accomplished via additive manufacturing of the chamber 26.

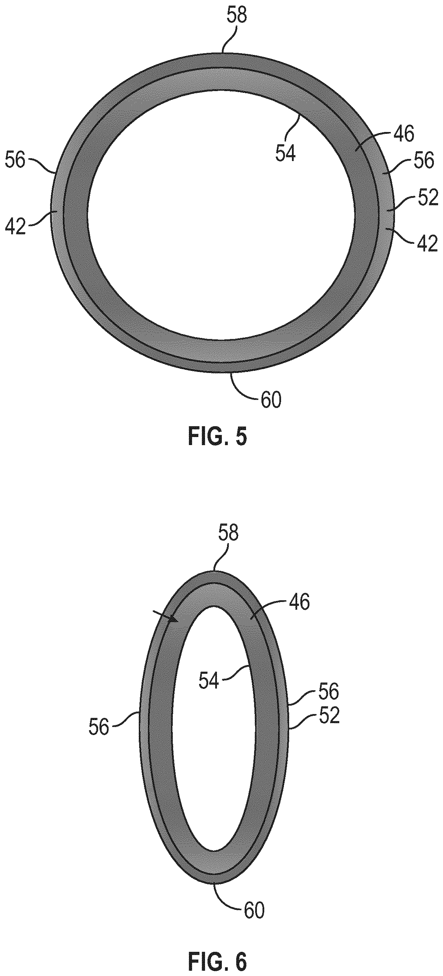

Referring now to FIG. 5 and FIG. 6, the placement of the selective reinforcement may be varied around a perimeter or circumference of the chamber 26. As illustrated in the cross-sectional views of FIG. 5 and FIG. 6, at the sides 56 of the cross-section as shown, the second material 42 is concentrated at an exterior side 52 of the chamber wall 46, while the second material 42 is relatively absent from an interior side 54 of the chamber wall 46. At a top 58 and bottom 60 of the cross-section shape, however, the configuration may be substantially reversed in that the second material 42 is concentrated at the interior side 54 of the chamber wall 46, while the second material is relatively absent from the exterior side 52 at these locations. When the chamber 46 is subjected to heating, as illustrated in FIG. 6, the curvature of the chamber wall 46 increases at the top 58 and bottom 60 portions, while at the sides 56 the chamber wall 46, the curvature of the chamber wall 46 decreases. This selective placement of the second material 42 in the chamber wall 46 results in shape change of the chamber 26 due to thermal effects, and in turn pumps the anolyte and catholyte into and out of the chambers 26, 28, 32, 34.

Pumping of the anolyte and the catholyte via the shape change of the chambers c 26, 28, 32, 34 allows for operation of the flow battery 10 without additional pumps, thus reducing complexity of the flow battery 10. Further, the flow battery 10 is activated by thermal energy, no electrical input is needed to activate the thermal battery 10. Exclusion of additional pump mechanisms also increases reliability of the flow battery 10 and reduces weight.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A battery system, comprising:
an anode circuit (12) configured to urge a flow of anolyte (14) therethrough to an anode side of an electrode;
a cathode circuit (16) configured to urge a flow of catholyte (18) therethrough to a cathode side of the electrode; and
an electric circuit (24) operably connected to the electrode to utilize electrical energy generated via a chemical reaction between the flow of anolyte and the flow of catholyte at the electrode;
wherein the flow of anolyte (14) is driven through the anode circuit (12) by thermal expansion and/or thermal contraction of one or more components of the anode circuit (12); and
wherein the flow of catholyte (18) is driven through the cathode circuit (16) by thermal expansion and/or thermal contraction of one or more components of the cathode circuit (16).

2. The battery system of claim 1, wherein at least one of the anode circuit (12) and the cathode circuit (16) include a chamber formed from a first thermally activated material having a first coefficient of thermal expansion, the chamber configured to change perimetrical shape when a temperature of an interior of the chamber is increased.

3. The battery system on claim 2, wherein the chamber is at least partially formed from a second thermally activated material having a second coefficient of thermal expansion less than the first coefficient of thermal expansion to effect the change in perimetrical shape of the interior of the chamber.

4. The battery system of claim 3, wherein positioning of the second thermally activated material in a chamber wall of the chamber varies around the perimeter of the chamber.

5. The battery system of claim 4, wherein at a first perimetrical location, the second thermally activated material is disposed at an interior side of the chamber wall, or wherein at a second perimetrical location, the second thermally activated material is disposed at an exterior side of the chamber wall.

6. The battery system of claim 2, wherein the chamber is formed by one or more additive manufacturing processes.

7. The battery system of any preceding claim, wherein the battery system is absent an electrically or mechanically driven pump to urge the flow of anolyte or the flow of catholyte toward the electrode and/or wherein the electric circuit is operably connected to the electrode via one or more current collectors disposed at the electrode.

8. The battery system of any preceding claim, wherein the electrical energy is generated via ion transfer at the electrode.

9. A method of operating a battery system, comprising:
urging a flow of anolyte through an anode circuit (12) to an anode side of an electrode;
urging a flow of catholyte through a cathode circuit (16) to a cathode side of the electrode; and
generating electrical energy at the electrode via a chemical reaction between the flow of anolyte and the flow of catholyte at the electrode;
wherein the flow of anolyte is driven through the anode circuit (12) by thermal expansion and/or thermal contraction of one or more components of the anode circuit (12); and
wherein the flow of catholyte is driven through the cathode circuit (16) by thermal expansion and/or thermal contraction of one or more components of the cathode circuit (16).

10. The method of claim 9, wherein at least one of the anode circuit (12) and the cathode circuit (16) include a chamber formed from a first thermally activated material having a first coefficient of thermal expansion, the chamber configured to change perimetrical shape when a temperature of an interior of the chamber is increased.

11. The method of claim 10, further comprising at least partially forming the chamber from a second thermally activated material having a second coefficient of thermal expansion less than the first coefficient of thermal expansion to effect the change in perimetrical shape of the interior of the chamber.

12. The method of claim 11, further comprising varying a positioning of the second thermally activated material in a chamber wall of the chamber around the perimeter of the chamber.

13. The method of claim 12, wherein at a first perimetrical location, the second thermally activated material is disposed at an interior side of the chamber wall, and/or wherein at a second perimetrical location, the second thermally activated material is disposed at an exterior side of the chamber wall.

14. The method of claim 10, further comprising forming the chamber by one or more additive manufacturing processes.

15. The method of claim 9, wherein the battery system is absent an electrically or mechanically driven pump to urge the flow of anolyte or the flow of catholyte toward the electrode, and/or wherein the electric circuit is operably connected to the electrode via one or more current collectors disposed at the electrode, and/or further comprising generating the electrical energy via ion transfer at the electrode.
